Europäisches Patentamt

European Patent Office

Office européen des brevets

(11) Veröffentlichungsnummer: **0 224 826**
**A1**

## (12) EUROPÄISCHE PATENTANMELDUNG

(21) Anmeldenummer: 86116218.8

(22) Anmeldetag: 22.11.86

(51) Int. Cl.⁴: **A01D 34/82** , A01D 75/20

(30) Priorität: 06.12.85 DE 3543166

(43) Veröffentlichungstag der Anmeldung:
10.06.87 Patentblatt 87/24

(84) Benannte Vertragsstaaten:
AT CH FR GB IT LI SE

(71) Anmelder: **GUTBROD-WERKE GMBH**
**Industriegelände Postfach 60**
**D-6601 Saarbrücken-Bübingen/Saar(DE)**

(72) Erfinder: **Klever, Manfred**
**Scheidter Strasse 40**
**D-6601 Saarbrücken-Scheidterberg/Saar(DE)**
Erfinder: **Rott, Karl-Heinz**
**Waldstrasse 17**
**D-6601 Saarbrücken-Bübingen/Saar(DE)**

(74) Vertreter: **Boecker, Carl Otto, Dipl.-Ing.**
**Dr. Ehrhardt-Strasse 31**
**D-6670 St. Ingbert (Saar)(DE)**

(54) **Schaltmechanismus mit Sicherheitsbetätigung für elektrisch betriebene Geräte für die Rasenpflege.**

(57) Schaltmechanisms mit Sicherheitsbetätigung, insbesondere für Rasenmäher oder dergleichen, bei der der Schalthebel (7) als Kurbel ausgebildet ist, deren Schaltnocken (8, 9) tragende Kurbelachse - (7b) normalerweise verriegelt ist und die durch eine Axialverstellung über seitlichen Handdruck auf die Kurbelwange (7a) entriegelbar ist.

FIG. 4

EP 0 224 826 A1

**"Schaltmechanismus mit Sicherheitsbetätigung für elektrisch betriebene Geräte für die Rasenpflege"**

Die Erfindung betrifft einen Schaltmechanisms mit Sicherheitsbetätigung für elektrisch betriebene Geräte für die Rasenpflege, mit einem gegen einen Führungsholm entgegen Federkraft schwenkbaren Schalthebel mit Einschaltfunktion, der in abgeschwenkter Ausschaltlage mechanisch verriegelt ist und durch die Sicherheitsbetätigung vorübergehend entriegelt wird. Durch die Sicherheitsbetätigung soll die Unfallgefahr herabgesetzt werden, die bestehen würde, wenn allein durch Anziehen des Schaltgriffes der elektrische Kontakt geschlossen und beispielsweise das Mähwerk eines Rasenmähers in Gang gesetzt würde.

Bisher bestand die Sicherheitsbetätigung aus einem besonderen Schaltknopf, über den die Schaltwelle mechanisch verriegelt werden konnte. Zum Drücken des Schaltknopfes mußte die zweite freie Hande zu Hilfe genommen werden. Aufgabe der Erfindung ist es, eine Sicherheitsbetätigung für einen Schaltmechanismus der beschriebenen Art zu finden, die eine Einhandbedienung ermöglicht, ohne daß die Unfallgefahr hierdurch wieder erhöht wird.

Die Lösung dieser besteht aus den im Kennzeichen des Patentanspruches 1 angegeben Merkmalen.

Hiernach ist der Schalthebel der Handgriff einer in einem Schaltgehäuse drehbar und gegen Federdruck axial verschieblich gelagerten Kurbel, die durch eine Axialverstellung entriegelbar ist, wonach der Schalthebel gegen den Führungsholm verschwenkt werden kann, um die elektrischen Kontakte zu schließen. Zum Entriegeln bedarf es eines Handdruckes in Richtung der axialen Beweglichkeit der Kurbel, wozu der Handgriff als flachgedrückter Ring zur Aufnahme von vier Fingern einer Hand ausgebildet sein könnte wie bei dem Spannhebel des weltbekannten Winchester-Gewehrs. Es empfiehlt sich jedoch eine Ausbildung nach Patentanspruch 2, wonach die Axialverstellung zum Entriegeln der Kurbel bzw. des Schalthebels durch seitlichen Handdruck auf die Kurbelwange der Kurbel erfolgt.

Damit man beispielsweise beim Rasenmähen den seitlichen Handdruck zum Halten der Kurbel in der entriegelten Axialstellung nicht zusätzlich zu dem Gedrückthalten des Schalthebels gegen den Druck einer Druckfeder aufrechterhalten muß, ist ein axialer Anschlag für die Kurbel vorgesehen, der den Federdruck aufnimmt. Die axiale Federpreßkraft muß jedoch kleiner sein als die Drehfederkraft, die den Schalthebel in die Ausschaltlage zurückzuschwenken sucht, damit der Schaltmechanismus ausgeschaltet und wieder verriegelt wird, sobald der Schalthebel losgelassen wird.

Weitere Ausgestaltungen der Erfindung sind in den Patentansprüchen 3 -6 angegeben.

In der Zeichnung ist ein Ausführungsbeispiel eines Schaltmechanisms mit Sicherheitsbetätigung gemäß der Erfindung dargestellt, und zwar zeigen

Fig. 1 einen Längsschnitt durch das an dem Führungsholm befestigte Schaltgehäuse zur Darstellung der elektrischen Verbindungen,

Fig. 2 einen Querschnitt durch das Schaltgehäuse nach der Linie II -II in Fig. 1 bzw. Fig. 4,

Fig. 3 eine Seitenansicht des Schaltgehäuses in Richtung des Pfeiles III in Fig. 1 mit dem Schalthebel in Ausschaltstellung,

Fig. 4 eine Draufsicht auf das Schaltgehäuse bei abgenommenem Gehäusedeckel mit Schnittdarstellung der Kurbelachse nach der Linie IV -IV in Fig. 3,

Fig. 5 einen Querschnitt nach der Linie V -V in Fig. 4,

Fig. 6 eine Teildarstellung aus Fig. 4 zur Darstellung der Federanordnung auf der Kurbelachse, und

Fig. 7 eine Einzelheit dazu.

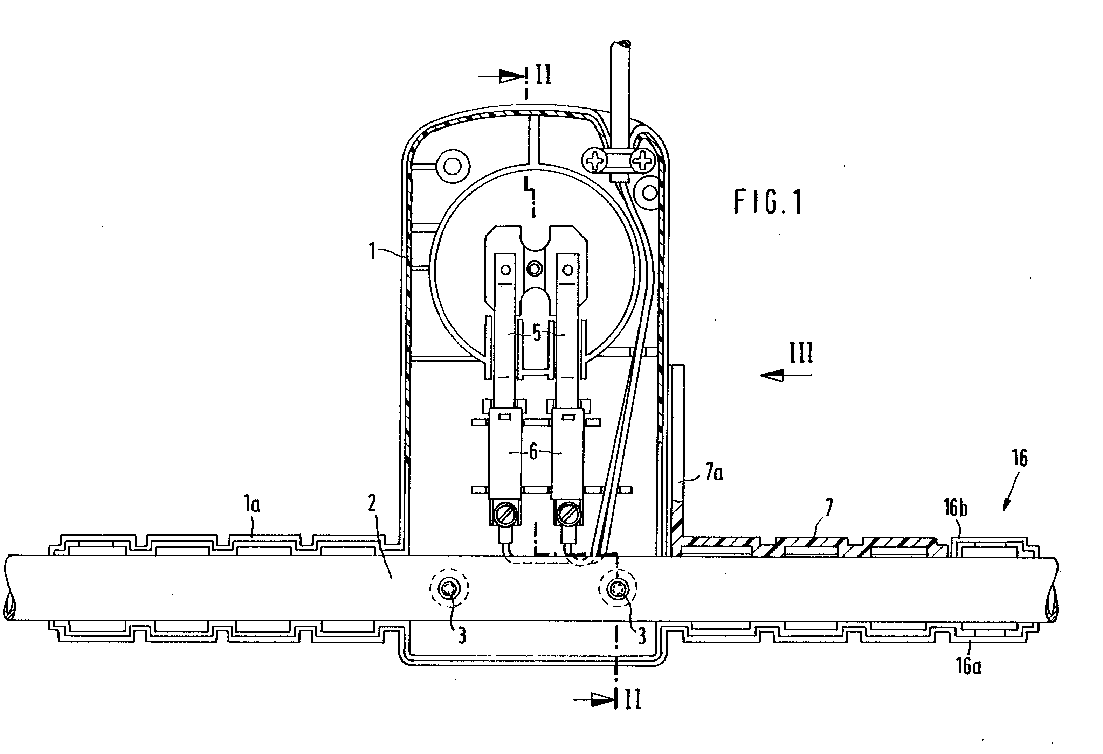

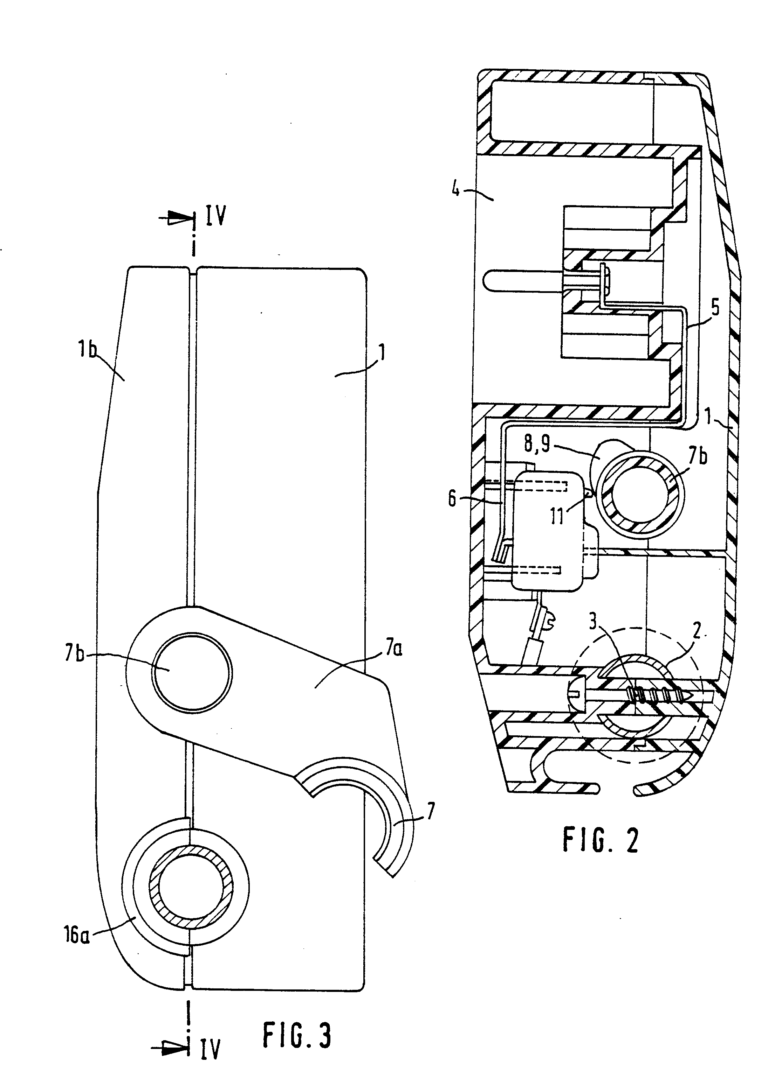

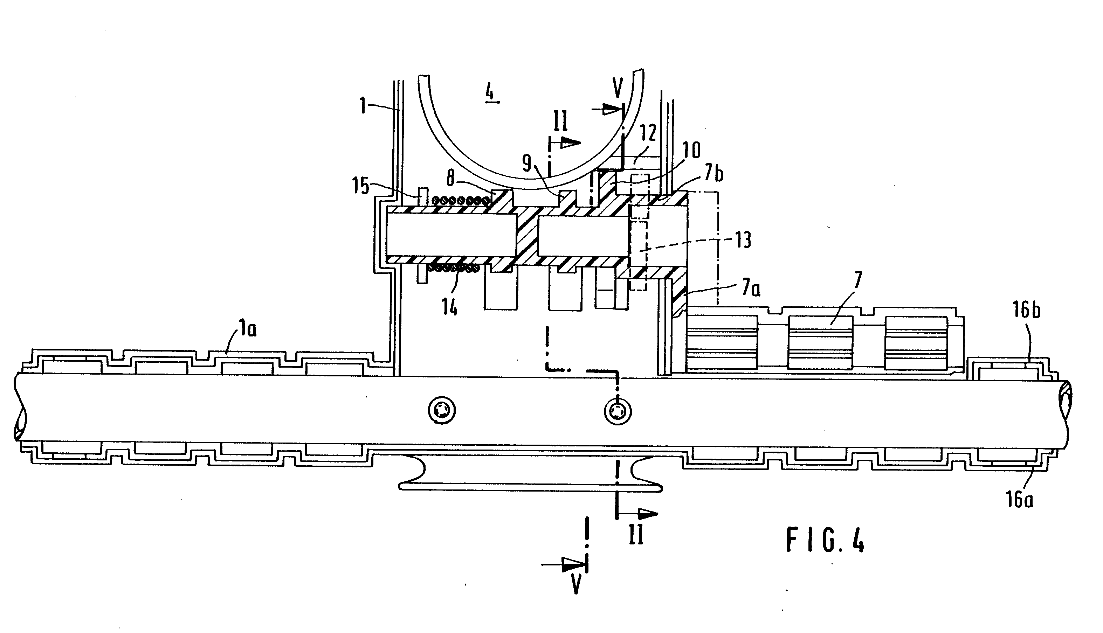

Nach Fig. 1 und 2 ist das Schaltgehäuse 1 auf dem Führungsholm 2 aus Strahlrohr mittels zweier Schrauben 3 befestigt und nimmt eine Steckdose 4 sowie Lamellen 5 und federnde Kontakte 6 in sich auf. Das Schaltgehäuse 1 ist ein Kunststoffspritzteil mit angeformten seitlichen, profilierten Griffschalen 1a zur Abdeckung des Führungsholmes 2 auf etwa der Hälfte seines Umfanges. Die andere Hälfte wird von ebensolchen Griffschalen abgedeckt, die an einem Gehäusedeckel 1b des zweiteilig ausgeführten Schaltgehäuses 1 angeformt sind (Fig. 3). Im Bereich der Bedienungsseite des Schaltmechanismus (Fig. 1 und 4 rechts) fehlen die an dem Schaltgehäuse 1 angeformten Griffschalen 1a, da diese hier den Schalthebel 7 bilden, der als Handgriff einer im Schaltgehäuse 1 gelagerten Kurbel aufzufassen ist, deren aus dem Schaltgehäuse 1 nach außen hervor tretende Kurbelwange 7a in Fig. 3 zu sehen ist und sich hier in Ausschaltlage befindet. Im Gegensatz zur Fig. 3 befindet sich in Fig. 1 der halbschalenförmige Schalthebel 7 sowie die Kurbelwange 7a in um ca. 45° beigeschwenkter Einschaltstellung.

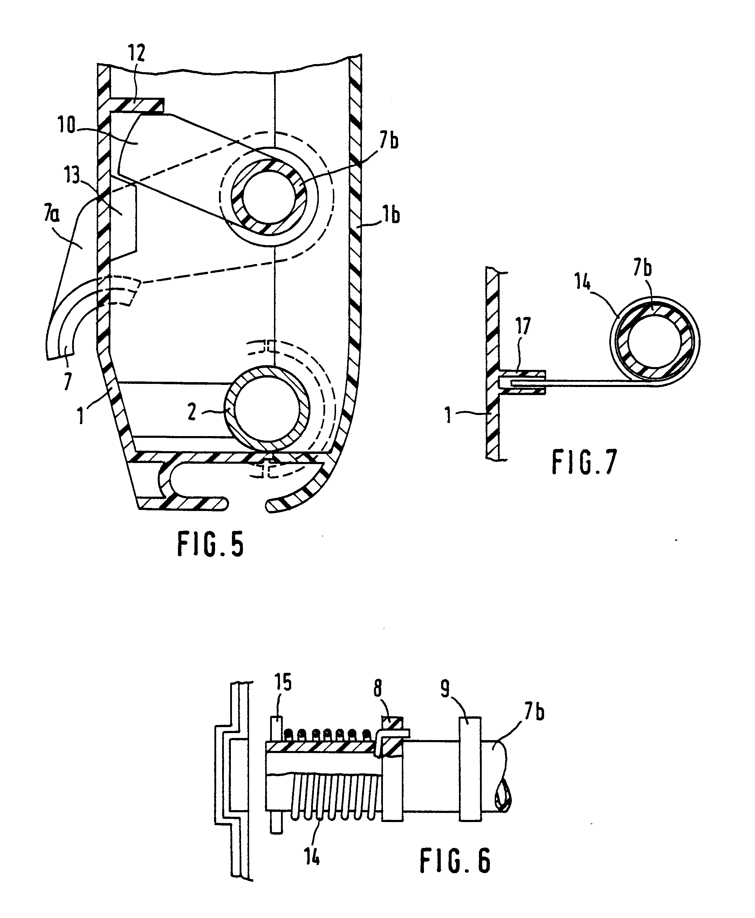

Fig. 4 zeigt den Schalthebel 7 in der abgeschwenkten Ausschaltstellung nach Fig. 3. Außer der Kurbelwange 7a gehört zur der "Schaltkurbel" eine Kurbelachse 7b, die in der Trennebene IV zwischen dem Schaltgehäuse 1 und dem Gehäusedeckel 1b nicht nur drehbar, sondern auch axial verschieblich gelagert ist. In Fig. 4 ist die aus einem einheitlichen Kunststoffspritzteil bestehende Schaltkurbel 7, 7a und 7b in der nach links verschobenen entriegelten Stellung dargestellt. Fig. 6 zeigt die axiale Ausgangslage, die in Fig. 4 für die Kurbelwange 7a und einen noch näher zu beschreibenden Verriegelungshebel 10 strichpunktiert angedeutet ist.

An der Kurbelachse 7b sind zwei Schaltnocken 8, 9 angeformt, die bei der entriegelten Axialstellung nach Fig. 4 den federnden Kontakten 6 gegenüberliegt. Nach Fig. 2 betätigen die Schaltnocken 8, 9 Schaltstifte 11 zum Drücken der federnden Kontakte 6.

An der Kurbelachse 7b ist ferner der schon erwähnte Verriegelungshebel 10 angeformt, der in der abgeschwenkten Ausschaltlage des Schalthebels 7 und jeder Axiallage der Kurbelachse 7b unter Federkraft an einem gehäuseseitigen leistenförmigen Anschlag 12 anliegt (Fig. 5), der sich über den Verschiebeweg der Kurbelachse 7b erstreckt. In der strichpunktiert dargestellten Ausgangs-Axiallage der Kurbelachse 7b liegt der Verriegelungshebel 10 auch einem gehäuseseitigen Anschlag 13 gegenüber, so daß die Kurbelachse 7b gegen Drehen verriegelt ist.

Die Kurbelachse 7b ist an ihrem linken Ende von einer Schraubenfeder 14 umgeben, die sich nach links an einem gehäuseseitig festgelegten Widerlager 15 abstützt. Wie Fig. 7 zeigt, ist das Ende der Schraubenfeder in eine gehäuseseitige Halterung 17 eingefädelt und somit undrehbar festgelegt. Das andere Ende der Schraubenfeder 14 stützt sich an einem von dem Schaltnocken 8 gebildeten Bund der Kurbelachse 7b ab und ist an diesem Bund axial eingefädelt (Fig. 6), d.h. mit mitdrehend festgelegt. Die Schraubenfeder 14 ist also zugleich Druckfeder für axiale Rückverstellung der Kurbelachse 7b als auch Drehfeder für die Rückschwenkbewegung des Schalthebels 7.

Die Wirkungsweise des dargestellten Schaltmechanismus mit Sicherheitsbetätigung ist folgende:

Normalerweise ist der Schalthebel 7 in der in Fig. 3 dargestellten Ausschaltstellung verriegelt. Es bedarf eines seitlichen Handdruckes auf die in Fig. 4 strichpunktiert dargestellte Kurbelwange 7a, um eine Entriegelung herbeizuführen, wodurch der Verriegelungshebel 10 von dem Anschlag 13 freikommt. Die Druckfeder 14 wird hierbei gespannt. Nunmehr kann der Schalthebel 7 gegen den Führungsholm 2 beigeschwenkt werden, wodurch die Kontakte 6 geschlossen werden. Entgegen dieser Schwenkbewegung wirkt die Schraubenfeder 14 als Drehfeder. Wenn der schalenförmige Schalthebel 7 an dem Führungsholm 2 anliegt und diesen auf der Hälfte seines Umfanges umfaßt, drückt er aufgrund der gespannten Schraubenfeder 14 gegen einen axialen Anschlagring 16, der auf dem Führungsholm 2 befestigt ist, wenn der seitliche Handdruck zum Entriegeln nachgelassen wird. Dieser Anschlagring 16 besteht zur Hälfte aus einem Griffschalenteil 16a, das an dem Gehäusedeckel 1b angeformt ist, und zur anderen Hälfte aus einer aufgesprengten Halbschale 16b. Der Anschlagring 16 bewirkt somit eine Axialverriegelung der Kurbelachse 7b und damit eine Beibehaltung der Einschaltfunktion, solange der Schalthebel 7 nur gedrückt gehalten wird. Die Einschaltfunktion wird jedoch sofort unterbrochen, wenn der Schalthebel 7 losgelassen wird und unter dem Druck der Drehfeder in seine Ausschaltstellung zurückkehrt, unter gleichzeitiger axialer Rückverstellung der Kurbelachse 7b in die Verriegelungsstellung. Die Drehfederkraft der Schraubenfeder 14 muß daher größer sein als die axiale Federpreßkraft dieser Feder, damit der Schalthebel 7 nicht durch Reibungskraft an dem axialen Anschlagring 16 hängenbleibt, wenn der Schalthebel 7 losgelassen wird.

## Ansprüche

1. Schaltmechanismus mit Sicherheitsbetätigung für elektrisch betriebene Geräte für die Rasenpflege, mit einem gegen einen Führungsholm entgegen Federkraft schwenkbaren Schalthebel mit Einschaltfunktion, der in abgeschwenkter Ausschaltlage mechanisch verriegelt ist und durch die Sicherheitsbetätigung vorübergehend entriegelt wird, dadurch gekennzeichnet, daß der Schalthebel (7) der Handgriff einer in einem Schaltgehäuse (1, 2) drehbar und gegen Federdruck axial verschieblich gelagerten Kurbel ist, deren Kurbelachse (7b) Schaltnocken (8, 9) trägt, und daß die Sicherheitsbetätigung darin besteht, daß die Kurbel (7, 7a, 7b) durch eine Axialverstellung entriegelbar ist, durch die eine Druckfeder (14) gespannt wird, die die Kurbel bei gegen den Führungsholm (2) beigeschwenktem Schalthebel (7) gegen einen axialen Anschlag (16) drückt.

2. Schaltmechanismus nach Anspruch 1, dadurch gekennzeichnet, daß die Kurbelwange (7a) der den Schalthebel (7) bildenden Kurbel in verriegelter Ausgangslage aus dem Schaltgehäuse (1) hervortretend angeordnet ist, so daß die Axialverstellung zum Entriegeln der Kurbel bzw. des Schalthebels durch seitlichen Handdruck auf die Kurbelwange erfolgt.

3. Schaltmechanismus nach Anspruch 2, dadurch gekennzeichnet, daß der Schalthebel (7) halbschalenförmig ausgebildet ist und in beigeschwenkter Einschaltlage den Führungsholm (2) auf etwa der Hälfte seines Umfanges umfaßt, und daß der axiale Anschlag aus einem auf dem Führungsholm angeordneten Ring (16) besteht.

4. Schaltmechanismus nach Anspruch 1, dadurch gekennzeichnet, daß die die Schaltnocken (8, 9) tragende Kurbelachse (7b) in der Trennebene (IV) des zweiteilig ausgeführten Schaltgehäuses (1, 1a) gelagert ist und einen radialen Verriegelungshebel (10) trägt, dem zwei gehäuseseitige Anschläge zugeordnet sind, nämlich ein sich über den axialen Verschiebeweg der Kurbelachse erstreckender leistenförmiger Anschlag (12), der die federbelastete Ausschalt-Schwenklage des Schalthebels (7) begrenzt, und ein Anschlagnocken (13), der in der federbelasteten Ausschalt-Axiallage die Kurbelachse (7b) gegen Drehen sperrt.

5. Schaltmechanismus nach Anspruch 4, dadurch gekennzeichnet, daß die Kurbelachse (7b) von einer Schraubenfeder (14) umgeben ist, die sich mit einem Ende sowohl an einem gehäuseseitig festgelegten Widerlager (15) abstützt als auch gehäuseseitig undrehbar festgelegt ist, und die sich mit dem anderen Ende sowohl an einem Bund (8) der Kurbelachse (7b) abstützt als auch an diesem Bund mitdrehend festgelegt ist in dem Sinne, daß die Schraubenfeder zugleich Druckfeder für die axiale Rückverstellung der Kurbelachse als auch Drehfeder für die Rückschwenkbewegung des Schalthebels (7) ist.

6. Schaltmechanismus nach Anspruch 4 und 5, dadurch gekennzeichnet, daß die Kurbelachse (7b) den angeformten Schaltnocken (8, 9), dem Verriegelungshebel (10), der Kurbelwange (7a) und dem Schalthebel (7) aus einem einheitlichen Kunststoffspritzteil besteht.

FIG.1

0 224 826

FIG. 3

FIG. 2

FIG. 4

0 224 826

FIG.5

FIG.7

FIG. 6

Europäisches
Patentamt

**EUROPÄISCHER RECHERCHENBERICHT**

Nummer der Anmeldung

| | EINSCHLÄGIGE DOKUMENTE | | EP 86116218.8 |
|---|---|---|---|
| **Kategorie** | Kennzeichnung des Dokuments mit Angabe, soweit erforderlich, der maßgeblichen Teile | **Betrifft Anspruch** | **KLASSIFIKATION DER ANMELDUNG (Int. Cl.4)** |
| A | <u>DE - A1 - 3 033 346</u> (WOLF-GERÄTE GMBH)<br><br>* Gesamt *<br><br>-- | 1 | A 01 D 34/82<br>A 01 D 75/20 |
| A | <u>AT - B - 278 424</u> (WOLF-GERÄTE GMBH)<br><br>* Gesamt *<br><br>---- | 1 | |
| | | | **RECHERCHIERTE SACHGEBIETE (Int. Cl.4)**<br><br>A 01 D 1/00<br>A 01 D 34/00<br>A 01 D 75/00 |

Der vorliegende Recherchenbericht wurde für alle Patentansprüche erstellt.

| Recherchenort | Abschlußdatum der Recherche | Prüfer |
|---|---|---|
| WIEN | 03-03-1987 | RIEMANN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82